(19) Europäisches Patentamt / European Patent Office / Office européen des brevets

(11) **EP 3 217 529 B1**

(12) **FASCICULE DE BREVET EUROPEEN**

(45) Date de publication et mention
de la délivrance du brevet:
**31.03.2021 Bulletin 2021/13**

(51) Int Cl.:
*H02P 6/06* *(2006.01)* *H02P 21/10* *(2016.01)*
*B60L 15/00* *(2006.01)*

(21) Numéro de dépôt: **17154384.6**

(22) Date de dépôt: **02.02.2017**

(54) **PROCÉDÉ ET SYSTÈME DE PILOTAGE D'UN MOTEUR ÉLECTRIQUE EN CAS DE DÉFAILLANCE DU SIGNAL DE POSITION DU ROTOR**

VERFAHREN UND SYSTEM ZUR STEUERUNG EINES ELEKTROMOTORS IM FALLE EINES AUSFALLS DES POSITIONSSIGNALS EINES ROTORS

METHOD AND SYSTEM FOR CONTROLLING AN ELECTRIC MOTOR IN THE EVENT OF A FAILURE OF THE ROTOR POSITION SIGNAL

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.03.2016 FR 1651883**

(43) Date de publication de la demande:
**13.09.2017 Bulletin 2017/37**

(73) Titulaire: **Renault s.a.s**
**92100 Boulogne-Billancourt (FR)**

(72) Inventeurs:
• **MARTINEZ, Alexandre**
**91370 VERRIERES LE BUISSON (FR)**
• **MARSILIA, Marco**
**94230 CACHAN (FR)**

(56) Documents cités:
**EP-A1- 2 437 392** **EP-A1- 2 555 417**
**US-A- 5 748 503** **US-A1- 2004 158 372**
**US-A1- 2009 076 679**

**Description**

L'invention se rapporte au domaine des moteurs électriques à rotor bobiné et de l'industrie des transports électriques. Elle trouve une application avantageuse sous la forme d'un procédé et d'un système associé de contrôle d'un moteur électrique dans un véhicule automobile électrique.

Les groupes motopropulseurs électriques des véhicules électriques comprennent au moins un moteur électrique relié à un système d'électronique de puissance permettant d'alimenter le moteur en courant alternatif à partir d'une batterie d'accumulation électrique dite batterie de traction. Le moteur électrique est constitué d'un rotor mobile et d'un stator fixe. Dans le cas d'un moteur triphasé à rotor bobiné, la consigne de couple issue d'une requête de couple du conducteur est transformée en consignes de courants statoriques et en consigne de courant d'excitation du rotor. La réalisation de la volonté conducteur est assurée par l'asservissement en boucle fermée de mesures des trois courants de phase du stator et du courant d'excitation du rotor, auxdites consignes grâce à la commande des transistors d'un onduleur (pour les courants de phase) et des transistors d'un hacheur (pour le courant d'excitation). Cette stratégie de pilotage des courants est hébergée dans l'onduleur. En fonctionnement nominal, ledit pilotage utilise les mesures en temps réel des trois courants de phase (par a minima deux capteurs de courants), du courant d'excitation (par a minima un capteur de courant), de la tension d'alimentation de l'onduleur (par a minima un capteur de tension) et de la position du rotor, c'est-à-dire l'angle d'un point du rotor par rapport à un repère fixe dans l'espace. Or, parmi les éléments les plus critiques pour ce type de moteur électrique se trouve le capteur de position du rotor sachant qu'en cas de défaillance de l'information de position du rotor une panne immobilisante affecte ledit véhicule électrique car le moteur est alors immédiatement arrêté, nécessitant le remplacement dudit capteur.

Le brevet EP 2437392 propose un pilotage des courants d'un onduleur de véhicule électrique utilisant en plus du capteur de position un capteur de couple supplémentaire pour optimiser la commande des transistors de l'onduleur. Cependant, en cas de défaillance du capteur de position du rotor ce capteur supplémentaire ne permet pas le pilotage des courants de l'onduleur et n'empêcherait donc pas la panne immobilisante du véhicule. Par ailleurs, le brevet EP 2555417 propose un procédé de détermination de la position rotor sans capteur de position en utilisant au moins un capteur de roue. Le procédé nécessite une phase de commande d'impulsions de courant de sens différents pour déterminer l'angle absolu de la position du rotor, occasionnant des mouvements du rotor ce qui signifie que pour déterminer ledit angle il faut initialement provoquer un mouvement du rotor. Cette stratégie ne peut donc être utilisée dans le cadre d'une défaillance du capteur de position. Les documents US2009/0076679 et US2004/0158372 proposent des méthodes pour diagnostiquer des capteurs de vitesses.

Un des buts de l'invention est de remédier à au moins une partie des inconvénients de la technique antérieure en fournissant un procédé de pilotage des courants d'un onduleur de moteur électrique en cas de défaillance du signal de position du rotor, qui permet d'éviter la panne immobilisante d'un véhicule afin que le conducteur dudit véhicule puisse finir son trajet. Pour ce faire, l'invention s'appuie sur la connaissance de la relation de proportionnalité entre la vitesse des roues et la vitesse de rotation du rotor et de la relation entre la position du rotor et la vitesse de rotation du rotor. Il en découle que le pilotage des courants de phase et des courants d'excitation par l'onduleur peut provisoirement, dans un mode dégradé, utiliser la vitesse de roue mesurée par un capteur de roue en cas de défaillance du signal de position du rotor. L'invention décrit donc un mode de pilotage desdits courants utilisant la vitesse de roue en cas de perte d'une information valide de position du rotor.

A cette fin, l'invention propose un procédé de pilotage d'un moteur à rotor bobiné de véhicule électrique tel que divulgué dans les revendications 1 et 9.

Grâce à l'invention, la détection de la défaillance du signal de position du rotor permet de passer dans un mode de fonctionnement du pilotage utilisant la vitesse de roue sans arrêt du moteur, avec alerte possible du conducteur, et permet de basculer d'un mode de pilotage nominal à un mode de pilotage dédié à la perte du signal de la position du rotor sur des conditions simples.

Selon une caractéristique avantageuse, dans ladite étape de détermination de ladite vitesse de roue on calcule la moyenne de vitesses mesurées sur chacune des roues dudit véhicule par au moins un capteur de vitesse de roue. Ce procédé utilise des capteurs de vitesse de roue déjà présents sur le véhicule, puisque ces capteurs sont aujourd'hui disposés sur tous les véhicules au nombre de quatre, un capteur sur chaque roue.

Selon une autre caractéristique avantageuse, ladite défaillance du signal de position du rotor est détectée si l'écart entre une mesure d'un premier capteur de position du rotor et une mesure d'un second capteur de position du rotor est supérieur à un seuil d'angle prédéterminé. Ce premier mode de détection de la défaillance du signal de position du rotor est simple grâce à une redondance de capteurs.

Selon une autre caractéristique avantageuse, ledit signal de position du rotor est la moyenne entre lesdites deux mesures de capteurs de position du rotor, ce qui permet une évaluation simple du signal de position en cas de redondance de capteurs.

Selon une autre caractéristique avantageuse, ladite défaillance du signal de position du rotor est détectée si l'écart en valeur absolue entre une vitesse de rotation du rotor calculée à partir dudit signal de position du rotor et une vitesse de rotation du rotor déterminée à partir de ladite détermination de la vitesse de roue est supérieur à un seuil de vitesse prédéterminé.

L'avantage de cette seconde variante moins simple est d'être plus économique en utilisant les capteurs roue déjà présents sur le véhicule pour la régulation des systèmes de freinage.

Selon une autre caractéristique avantageuse, ledit procédé comporte :

- une étape de détermination d'une vitesse de rotation du rotor à partir de ladite vitesse déterminée de roue,
- une étape d'estimation d'une position du rotor à partir de ladite vitesse du rotor déterminée précédemment,
- une étape de correction de la consigne du courant d'excitation du rotor utilisant ladite consigne du courant d'excitation dépendant de ladite vitesse déterminée de rotation du rotor, ladite consigne de couple ainsi qu'une mesure ou estimation dudit couple moteur.

Ce procédé est facile à implanter car il comporte peu d'étapes nouvelles nécessaires au pilotage utilisant la vitesse roue en cas de défaillance du signal de position du rotor. Ces étapes pourraient même être réalisées en parallèle continuement sans consommer beaucoup de ressource mémoire.

Selon une autre caractéristique avantageuse, ladite étape de détermination de vitesse de rotation du rotor comporte la multiplication de ladite vitesse déterminée de roue par un rapport de réduction du réducteur du véhicule, permettant une obtention simple de la vitesse de rotation du rotor.

Selon une autre caractéristique avantageuse, ladite étape de correction de la consigne du courant d'excitation comporte :

- une étape de soustraction dudit couple moteur estimé à ladite consigne de couple,
- une étape de multiplication du résultat de ladite étape de soustraction par un facteur positif ou nul pour obtenir une erreur pondérée,
- une étape d'intégration temporelle de ladite erreur pondérée,
- une étape d'addition à la consigne du courant d'excitation du résultat de ladite intégration de ladite erreur pondérée,
- une étape de saturation en bas par zéro et en haut par une valeur maximale prédéterminée du résultat de ladite étape d'addition pour obtenir une consigne corrigée du courant d'excitation.

Cette correction permet de garantir la sécurité du conducteur et des passagers pour finir le trajet en compensant l'imprécision des calculs basés sur la vitesse de roue moins précis que ceux utilisant la position du rotor.

Selon une autre caractéristique avantageuse, ledit facteur est nul lorsqu'au moins une des trois conditions suivantes est vérifiée :

- ladite consigne corrigée du courant d'excitation est nulle,
- ou ladite consigne corrigée du courant d'excitation vaut ladite valeur maximale prédéterminée,
- ou la valeur absolue du résultat de ladite étape d'intégration de ladite erreur pondérée est supérieure ou égale à un seuil prédéterminé,

sinon ledit facteur est positif.

L'application de ce procédé est simple puisqu'il ne requiert la mise au point que d'un seul facteur, qui, quand il est mis à 0 permet de désactiver la stratégie, ce qui est utile lors des phases de validation pour évaluer les gains dudit procédé.

Selon une autre caractéristique avantageuse, la traction du véhicule est arrêtée dès que la valeur absolue du résultat de ladite étape d'intégration de ladite erreur pondérée est supérieure ou égale à un seuil prédéterminé, afin de ne permettre le roulage que tant que la précision des signaux utilisés en mode dégradé reste suffisante pour assurer la sécurité à bord du véhicule.

L'invention concerne aussi un système de pilotage d'un moteur à rotor bobiné de véhicule électrique comportant:

- un moyen de réception d'une consigne de couple,
- un moyen de réception d'un signal de position du rotor,
- un moyen de calcul d'une vitesse du rotor à partir dudit signal de position du rotor,
- un moyen de détermination de consignes de courants statoriques et d'une consigne du courant d'excitation utilisant ledit signal de position du rotor,
- un moyen d'asservissement des courants de phase dudit moteur aux consignes de courants statoriques en fonction dudit signal de position du rotor,
- un moyen d'asservissement d'un courant d'excitation à la consigne du courant d'excitation,

caractérisé en ce qu'il comporte un moyen de détection de défaillance du signal de position du rotor, apte à activer un moyen de remplacement dudit signal de position du rotor par un signal obtenu à partir d'un moyen de détermination de la vitesse de roue du véhicule.

Selon une caractéristique avantageuse, ledit système comporte :

- un moyen de détermination d'une vitesse de rotation du rotor à partir d'une vitesse de roue déterminée par ledit moyen de détermination de vitesse de roue,
- un moyen d'estimation d'une position du rotor à partir de ladite vitesse du rotor déterminée par ledit moyen de détermination de vitesse du rotor
- un moyen de correction de la consigne du courant d'excitation du rotor utilisant ladite consigne du courant d'excitation, ladite consigne de couple ainsi qu'une mesure ou estimation dudit couple moteur issue d'un moyen de mesure ou d'estimation dudit couple moteur.

Selon une autre caractéristique avantageuse, ledit moyen de détermination de vitesse de rotation du rotor comporte un moyen de multiplication de ladite vitesse déterminée de roue par un rapport de réduction du réducteur du véhicule.

Ce système présente des avantages analogues à ceux du procédé.

BREVE DESCRIPTION DES FIGURES

D'autres caractéristiques et avantages apparaîtront à la lecture d'un mode de réalisation préféré décrit en référence aux figures dans lesquelles:

- la figure 1 représente un exemple de système de pilotage d'un moteur triphasé à rotor bobiné tel qu'existant dans l'état de l'art ;
- la figure 2 est un exemple de système de pilotage dudit moteur selon un mode de réalisation de l'invention ;
- la figure 3 représente l'organigramme du procédé conforme à l'invention ;
- la figure 4 représente le détail d'une étape donnée du procédé conforme à l'invention ;
- la figure 5 représente le détail d'une sous-partie du procédé conforme à l'invention et,
- la figure 6 représente une autre sous-partie du procédé conforme à l'invention.

DESCRIPTION DETAILLEE DES FIGURES

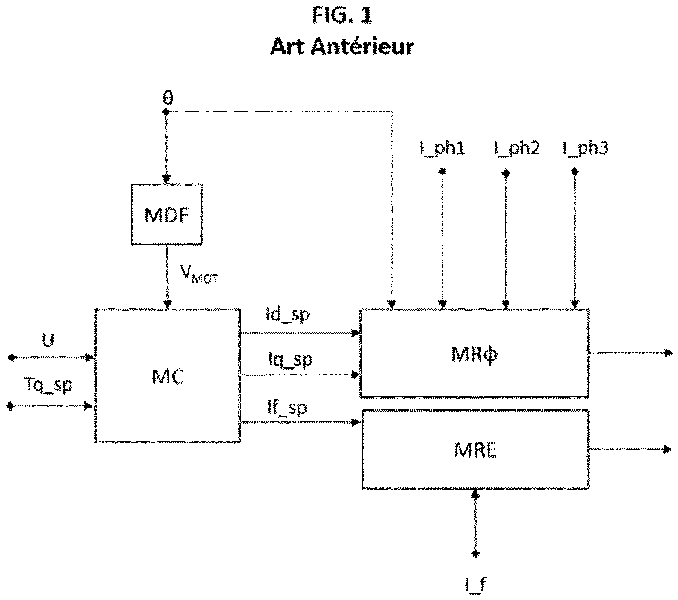

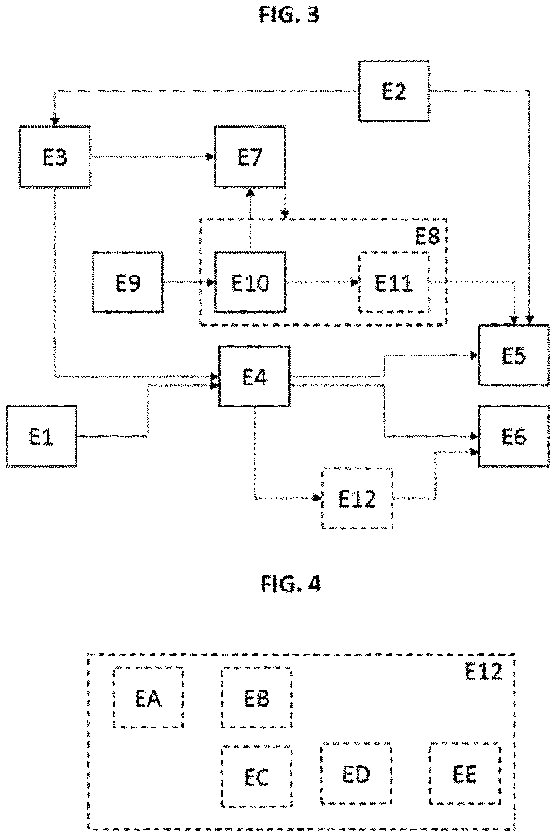

La **figure 1** illustre un système de pilotage d'un moteur triphasé à rotor bobiné d'un véhicule électrique tel qu'existant dans l'état de l'art. Ce système de pilotage est à lire en relation avec la **figure 3** qui illustre les étapes du procédé mis en œuvre dans l'invention comportant à ce titre les étapes du procédé existant dans l'état de l'art ainsi que de nouvelles étapes. Dans ce mode de fonctionnement nominal le signal de position du rotor $\theta$ est reçu lors d'une étape E2 de réception puis utilisé en entrée d'une étape E3 de calcul de la vitesse de rotation du rotor $V_{MOT}$ au moyen d'un module de dérivation et de filtrage MDF. Ladite vitesse de rotation du rotor $V_{MOT}$, ainsi que la tension U d'alimentation de l'onduleur et la consigne de couple demandée par le conducteur Tq_sp obtenue après traitement des informations reçues au moyen du pédalier du véhicule, sont reçues lors d'étapes de réception, telle que l'étape E1 de réception de la consigne de couple, puis utilisées en entrée d'une étape E4 de détermination des consignes de courants au moyen d'un module de calcul MC des consignes de courant. Ledit module MC calcule dans le repère de Park tournant à la vitesse du rotor les consignes de courants statoriques (qui deviendront physiquement les courants de phase) : Id_sp et Iq_sp et calcule la consigne du courant d'excitation: If_sp. Une étape E5 d'asservissement des courants de phase du moteur aux consignes de courants statoriques : Id_sp et Iq_sp en fonction dudit signal de position du rotor $\theta$ est ensuite réalisée au moyen d'un module de régulation MR$\phi$ des courants de phase. Ledit module de régulation MR$\phi$ des courants de phase procède pour cela à la transformation dans le domaine de Park des courants de phase mesurés I_ph1, I_ph2 et I_ph3 en fonction du signal de position du rotor $\theta$ puis réalise l'asservissement en boucle fermée desdits courants de phases mesurés: I_ph1, I_ph2 et I_ph3 auxdites consignes de courants statoriques : Id_sp et Iq_sp grâce au pilotage des transistors de l'onduleur. Parallèlement, une étape E6 d'asservissement du courant d'excitation à la consigne du courant d'excitation est réalisée au moyen d'un module de régulation MRE du courant d'excitation. Ledit module réalise l'asservissement en boucle fermée du courant d'excitation mesuré: I_f à ladite consigne du courant d'excitation If_sp grâce au pilotage des transistors du hacheur. Les sorties des régulateurs MR$\phi$ et MRE sont des tensions de commande statoriques et rotoriques qui sont envoyée à l'onduleur et au hacheur. Ainsi, lorsque tous les capteurs fonctionnent correctement, le pilotage des trois courants de phase et du courant d'excitation est assuré grâce à la mesure en temps réel des trois courants de phase : I_ph1, I_ph2 et I_ph3 (par a minima deux capteurs de courants), du courant d'excitation: I_f (par a minima un capteur de courant), de la tension U d'alimentation de l'onduleur (par a minima un capteur de tension) et de la mesure de la position du rotor θ. Dans ce schéma classique de pilotage d'un moteur électrique à rotor bobiné, l'information de position du rotor θ est donc essentielle et sa perte arrête le moteur provoquant une panne immobilisant le véhicule. Ce procédé de pilotage ne couvre donc que l'usage nominal lorsque le signal de position du rotor θ, mesuré au moyen d'un capteur de position angulaire, est disponible et valide.

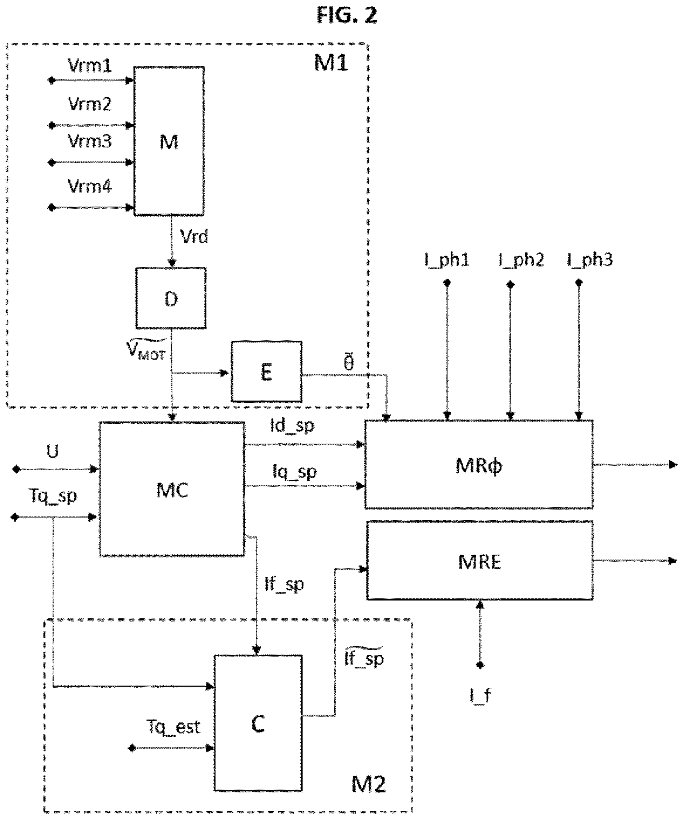

Sur la **figure 2** est représenté un système de pilotage dudit moteur selon un mode de réalisation de l'invention et la **figure 3** fait correspondre à ce système sa traduction sous forme de procédé. L'objectif de la stratégie proposée est de ne pas arrêter le moteur et donc d'éviter ladite panne immobilisant le véhicule lorsqu'une défaillance du capteur de position du rotor se produit. Il faut donc détecter ladite défaillance et pour ce faire une étape E7 de détection de défaillance du signal de position du rotor θ est insérée dans le procédé de pilotage dudit moteur. Ladite étape E7 de détection de défaillance peut se faire suivant deux variantes. La première variante repose sur une redondance de la mesure de la position du rotor au moyen de deux capteurs de position angulaire et consiste à calculer l'écart en valeur absolue entre les deux mesures de position du rotor ainsi obtenues au moyen desdits deux capteurs et si ledit écart est supérieur à un seuil d'angle prédéterminé ladite défaillance du signal de position du rotor θ est détectée et sinon ledit signal de position du rotor θ est la moyenne entre lesdites deux mesures de position du rotor. La seconde variante ne suppose pas de capteur de position angulaire additionnel et repose sur des capteurs de vitesse de rotation de roue existant déjà sur les véhicules actuels. En effet, ces capteurs de vitesse de roue sont aujourd'hui présents sur toutes les roues d'un véhicule pour les besoins du calculateur ABS pour « Anti Blocking System » ou ESP pour « Electronic Stability Program » afin d'anticiper les régulations pour éviter le blocage des roues. Ces capteurs peuvent être inductifs, magnéto-résistifs ou à effet Hall, ils mesurent le régime de chaque roue du véhicule sur une roue dentée ou magnétique. A partir des mesures de ces capteurs une étape E9 de détermination de la vitesse de roue Vrd est réalisée dans laquelle on calcule la moyenne des vitesses de roue mesurées sur chacune desdites roues dudit véhicule: Vrm1, Vrm2, Vrm3 et Vrm4 au moyen du module de moyenne M. Une étape E10 de détermination de la vitesse de rotation du rotor $\overline{V_{MOT}}$ à partir de la vitesse de roue moyennée Vrd est réalisée au moyen du module de détermination D. Ladite défaillance du signal de position du rotor est alors détectée si l'écart en valeur absolue entre la vitesse de rotation du rotor $V_{MOT}$ calculée à partir dudit signal de position du rotor $\tilde{\theta}$ et la vitesse de rotation du rotor $\overline{V_{MOT}}$, déterminée à partir de la vitesse de roue Vrd, est supérieur à un seuil de vitesse prédéterminé. Une fois cette défaillance détectée on passe instantanément dans un mode dégradé de fonctionnement du pilotage utilisant ladite vitesse de roue Vrd et non plus le signal de position du rotor θ sans arrêt du moteur. Par ailleurs, la détection de ladite défaillance peut donner lieu à une alerte du conducteur par une interface homme-machine afin d'informer ledit conducteur de ce mode dégradé et de l'informer qu'aucun autre trajet ne sera autorisé ou ne sera autorisé que dans certaines limites. Dans ce mode dégradé l'étape E7 de détection de la défaillance est suivie d'une étape E8 de remplacement dudit signal de position du rotor θ par un signal obtenu à partir d'une étape E9 de détermination de la vitesse de roue Vrd du véhicule. Ledit remplacement comporte :

- une étape E10 de détermination d'une vitesse de rotation du rotor $\overline{V_{MOT}}$ à partir de ladite vitesse déterminée de roue Vrd
- une étape E11 d'estimation d'une position du rotor $\tilde{\theta}$ à partir de ladite vitesse du rotor $\overline{V_{MOT}}$ déterminée précédemment
- une étape E12 de correction de la consigne du courant d'excitation If_sp du rotor utilisant ladite consigne du courant d'excitation If_sp, ladite consigne de couple Tq_sp ainsi qu'une mesure ou estimation dudit couple réalisé par le moteur Tq_est.

Concrètement, les nouvelles étapes E7 de détection et E8 de remplacement se traduisent par l'ajout de deux nouveaux modules M1 et M2 au procédé. Le premier module M1 sert à calculer la vitesse de rotation du rotor $\overline{V_{MOT}}$ déterminée à partir de la détermination de la vitesse de roue Vrd ainsi que la position estimée du rotor $\tilde{\theta}$ qui en découle. Ledit premier module M1 contient :

- le module de moyenne M des vitesses de roue mesurées : Vrm1, Vrm2, Vrm3 et Vrm4 dont résulte la vitesse de roue moyennée Vrd
- le module de détermination D de la vitesse de rotation du rotor $V_{MOT}$ à partir de la vitesse de roue moyennée Vrd
- un module d'intégration E de la vitesse déterminée de rotation du rotor $\overline{V_{MOT}}$. Afin de définir plus précisément les différents modules invoqués, précisons que le module de moyenne M est ici un module de moyenne arithmétique, le module de détermination D est un simple multiplicateur par le rapport de réduction du réducteur du véhicule. Concernant le module E d'intégration, plus complexe, il sera défini ultérieurement.

Le second module M2 sert à corriger la consigne de courant d'excitation fonction de la vitesse de rotation du rotor $\overline{V_{MOT}}$ déterminée à partir de la détermination de la vitesse de roue Vrd car cette dernière est entachée d'imprécision et impacte fortement le calcul de la consigne du courant d'excitation If_sp. Le résultat de ce second module M2 est une consigne corrigée du courant d'excitation $\overline{If\_sp}$. Ladite correction est réalisée au moyen d'un module de correction C qui sera défini ultérieurement.

Ainsi, lorsque le signal de position du rotor θ est diagnostiqué défaillant :

- la position estimée du rotor $\tilde{\theta}$ est utilisée par le module de régulation MRφ des courants de phase à la place du signal de position du rotor θ
- la vitesse déterminée de rotation du rotor $\overline{V_{MOT}}$ est utilisée par le module de calcul MC des consignes de courant à la place du signal vitesse de rotation du rotor $V_{MOT}$.

La **figure 4** illustre le détail de l'étape E12 de correction de la consigne du courant d'excitation If_sp réalisée dans le second module M2 du procédé conforme à l'invention au moyen du module de correction C comportant :

- une étape EA de soustraction dudit couple moteur mesuré ou estimé Tq_est à ladite consigne de couple Tq_sp
- une étape EB de multiplication du résultat de ladite étape EA de soustraction par un facteur G positif ou nul pour obtenir une erreur pondérée $\tilde{\varepsilon}$
- une étape EC d'intégration temporelle de ladite erreur pondérée $\tilde{\varepsilon}$
- une étape ED d'addition à la consigne du courant d'excitation If_sp du résultat de ladite intégration de ladite erreur pondérée $\tilde{\varepsilon}$
- une étape EE de saturation en bas par zéro et en haut par une valeur maximale déterminée Max_If du résultat de ladite étape ED d'addition pour obtenir une consigne corrigée du courant d'excitation $\overline{If\_sp}$.

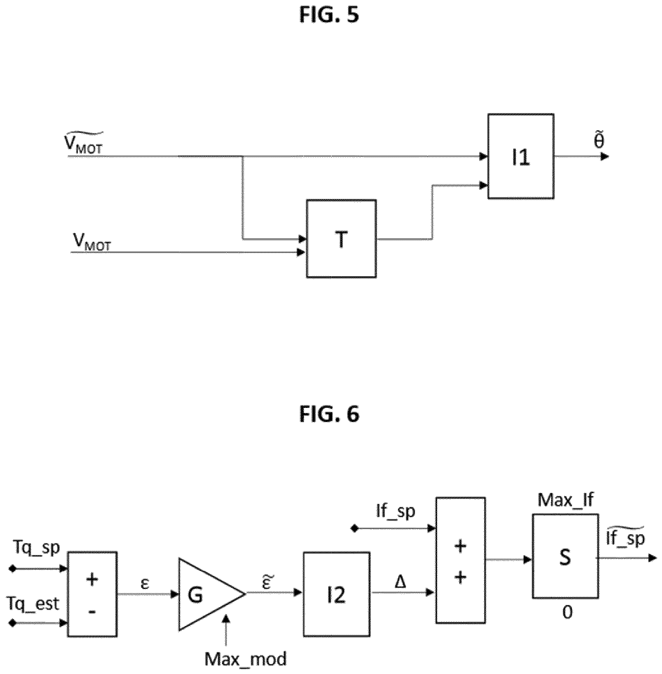

La **figure 5** illustre un exemple de contenu du module E d'intégration. Dans ce mode de réalisation la position estimée du rotor $\tilde{\theta}$ est obtenue en intégrant la vitesse déterminée de rotation du rotor $\overline{V_{MOT}}$. L'intégration I1 démarre à l'instant où le signal de sortie du module de déclenchement du temps d'intégration T prend la valeur 1. Ledit signal de sortie du module de déclenchement T est un booléen qui est initialisé à la valeur 0 au début de chaque mission (réveil du calculateur hébergeant le procédé) et qui prend la valeur 1 et garde cette valeur jusqu'à la fin de la mission en cours (endormissement dudit calculateur) si le signal de position du rotor θ est diagnostiqué défaillant ou s'il y a dépassement par la valeur absolue de la différence entre ladite vitesse déterminée de rotation du rotor et ladite vitesse calculée de rotation du rotor d'un seuil d'erreur prédéterminé, de 300 rpm par exemple, en continu au-delà d'une durée prédéterminée, de 1 s par exemple. La position estimée du rotor $\tilde{\theta}$ ainsi obtenue donne une estimation de la position rotor moins précise que le signal de position du rotor θ. En effet, l'estimation est d'autant moins précise que la durée de l'intégration de la vitesse déterminée de rotation du rotor $\overline{V_{MOT}}$ est importante. En effet chaque imprécision ou « bruit » sur la vitesse déterminée de rotation du rotor $\overline{V_{MOT}}$ est intégrée et par conséquent la position estimée du rotor $\tilde{\theta}$ cumule l'ensemble de ces imprécisions et bruits de mesure. C'est pour cette raison que le second module M2 de correction de la consigne de courant d'excitation est introduit. En effet sans ce second module M2 de correction, il ne serait pas possible de réaliser un couple conforme à la volonté conducteur et donc d'assurer la sécurité de conduite. Le second module M2 réalise alors une modulation en boucle fermée de la consigne de courant d'excitation If_sp permettant d'asservir l'estimation ou la mesure du couple réalisé par le moteur Tq_est à la consigne de couple demandée par le conducteur Tq_sp. Ainsi, lorsque le signal de position du rotor θ est diagnostiqué défaillant la consigne corrigée du courant d'excitation $\overline{If\_sp}$ est utilisée par le module de régulation du courant d'excitation à la place de la consigne du courant d'excitation If_sp.

La **figure 6** illustre un exemple de contenu du module de correction C qui élabore ladite consigne corrigée du courant d'excitation $\overline{If\_sp}$. Dans ce mode de réalisation pour construire la consigne corrigée du courant d'excitation $\overline{If\_sp}$ le module de correction C de la consigne du courant d'excitation comporte :

- une étape EA de soustraction dudit couple moteur estimé Tq_est à ladite consigne de couple Tq_sp, au moyen d'un bloc soustracteur
- une étape EB de multiplication du résultat de ladite étape EA de soustraction, c'est-à-dire de l'erreur de couple : ε par un facteur positif ou nul G pour obtenir une erreur pondérée $\tilde{\varepsilon}$, au moyen d'un bloc multiplicateur
- une étape EC d'intégration temporelle de ladite erreur pondérée $\tilde{\varepsilon}$ pour obtenir une compensation Δ de consigne de courant d'excitation, au moyen d'un bloc intégrateur I2
- une étape ED d'addition à la consigne du courant d'excitation If_sp de ladite compensation Δ, au moyen d'un bloc additionneur
- une étape EE de saturation en bas par zéro et en haut par une valeur maximale déterminée Max_If du résultat de ladite étape ED d'addition pour obtenir la consigne corrigée du courant d'excitation $\overline{If\_sp}$, au moyen d'un saturateur S.

Ces étapes peuvent s'écrire sous la forme de l'équation suivante :

$$If\overline{\_sp} = If\_sp + \int G\big(Tq\_sp - Tq\_est\big)$$

où ledit facteur G est un paramètre de réglage positif ou nul de la stratégie qui permet de régler la dynamique de correction. Plus précisément, dans ce mode de réalisation ledit facteur G est nul lorsqu'au moins une des trois conditions suivantes est vérifiée :

- ladite consigne corrigée du courant d'excitation $\overline{If\_sp}$ est nulle
- ladite consigne corrigée du courant d'excitation $\overline{If\_sp}$ vaut ladite valeur maximale prédéterminée Max_If
- la valeur absolue de ladite compensation $\Delta$ est supérieure ou égale à un seuil prédéterminé Max_mod

, sinon ledit facteur G est positif.

Un autre mode de réalisation équivalent consiste à démarrer l'intégration de ladite équation dès que le signal de position du rotor θ est diagnostiqué défaillant et à l'arrêter lorsqu'au moins une des conditions déjà précédemment énoncée est vérifiée, à savoir :

$$\overline{If\,sp} = 0 \quad \text{ou} \quad \overline{If\,sp} = \text{Max\_If} \quad \text{ou} \quad |\,\Delta\,| \geq \text{Max\_mod}$$

Autrement dit, cela signifie que la correction par modulation de la consigne du courant d'excitation If_sp cesse lorsque la consigne corrigée du courant d'excitation $\overline{If\_sp}$, atteint la valeur 0 ou valeur maximale prédéterminée Max_If, qui constitue un paramètre de réglage de la stratégie pouvant être réglée à la valeur maximale du courant d'excitation I_f en fonctionnement nominal ou à une valeur inférieure à celle-ci permettant de limiter le couple maximum. Ladite valeur maximale prédéterminée Max_If dépend du type de machine utilisée, ainsi pour une machine électrique 65kW / 220N.m synchrone à rotor bobiné Max_If pourrait valoir entre 10 et 15A par exemple.

De même, la correction par modulation de la consigne du courant d'excitation If_sp cesse lorsque la valeur absolue de la valeur absolue de ladite compensation $\Delta$ atteint ledit seuil prédéterminé Max_mod, ce dernier constituant aussi un paramètre de réglage de la stratégie.

Comme déjà évoqué, le mode dégradé peut s'appliquer au-delà de la fin du trajet dans certaines limites, ainsi une variante de la stratégie prévoit d'arrêter la traction lorsque la valeur absolue de ladite compensation $\Delta$ atteint un seuil prédéterminé choisi ici comme valant ledit seuil prédéterminé Max_mod. En effet le fait que cette condition soit vérifiée signifie que les signaux de position estimée du rotor $\tilde{\theta}$ et de vitesse déterminée de rotation du rotor $\overline{V_{MOT}}$ sont très imprécis, si bien que la compensation de l'erreur de couple par la modulation de la consigne de courant d'excitation risque d'être insuffisante pour assurer la sécurité de conduite et donc l'arrêt de la traction peut être un choix justifié.

## Revendications

1. Procédé de pilotage d'un moteur à rotor bobiné de véhicule électrique comportant:

 - une étape (E1) de réception d'une consigne de couple (Tq_sp)
 - une étape (E2) de réception d'un signal de position du rotor (θ)
 - une étape (E3) de calcul d'une vitesse du rotor (V_MOT) à partir dudit signal de position du rotor (θ)
 - une étape (E4) de détermination de consignes de courants statoriques (Id_sp et Iq_sp) et d'une consigne du courant d'excitation (If_sp) utilisant ladite vitesse calculée du rotor (V_MOT) et ladite consigne de couple (Tq_sp)
 - une étape (E5) d'asservissement des courants de phase dudit moteur aux consignes de courants statoriques (Id_spet Iq_sp) en fonction dudit signal de position du rotor (θ)
 - une étape (E10) de détermination d'une vitesse de rotation du rotor ($\overline{V_{MOT}}$) à partir de ladite vitesse déterminée de roue (Vrd) comportant, lorsqu'un réducteur est présent, la multiplication de ladite vitesse déterminée de roue (Vrd) par un rapport de réduction du réducteur du véhicule,
 **caractérisé en ce qu'**il comporte
 - une étape (E6) d'asservissement en boucle fermée d'un courant d'excitation à la consigne du courant d'excitation (If_sp)
 - une étape (E7) de détection de défaillance du signal de position du rotor, suivie d'une étape (E8) de remplacement dudit signal de position du rotor (θ) par un signal obtenu à partir d'une étape (E9) de détermination d'une vitesse de roue du véhicule
 - une étape (E11) d'estimation d'une position du rotor ($\tilde{\theta}$) à partir de ladite vitesse du rotor ($\overline{V_{MOT}}$) déterminée

précédemment, ladite étape (E11) d'estimation d'une position du rotor ($\tilde{\theta}$) étant une étape d'intégration temporelle conditionnée

- à ladite défaillance du signal de position du rotor,
ou,
- au dépassement par la valeur absolue de la différence entre ladite vitesse déterminée de rotation du rotor ($\overline{V_{MOT}}$) et ladite vitesse calculée de rotation du rotor (VMOT) d'un seuil d'erreur prédéterminé en continu au-delà d'une durée prédéterminée.

- une étape (E12) de correction de la consigne du courant d'excitation du rotor (If_sp) utilisant ladite consigne de courant d'excitation (If_sp) dépendant de ladite vitesse déterminée de rotation du rotor ($\overline{V_{MOT}}$), ladite consigne de couple (Tq_sp) ainsi qu'une mesure ou estimation dudit couple moteur (Tq_est).

2. Procédé selon la revendication 1 **caractérisé en ce que** dans ladite étape (E9) de détermination de ladite vitesse de roue on calcule la moyenne de vitesses mesurées sur chacune des roues dudit véhicule (Vrm1, Vrm2, Vrm3 et Vrm4) par au moins un capteur de vitesse de roue.

3. Procédé selon la revendication 1 ou 2 **caractérisé en ce que** ladite défaillance du signal de position du rotor est détectée si l'écart entre une mesure d'un premier capteur de position du rotor et une mesure d'un second capteur de position du rotor est supérieur à un seuil d'angle prédéterminé.

4. Procédé selon la revendication 3 **caractérisé en ce que** ledit signal de position du rotor ($\theta$) est la moyenne entre lesdites deux mesures de capteurs de position du rotor.

5. Procédé selon la revendication 1 ou 2 **caractérisé en ce que** ladite défaillance du signal de position du rotor est détectée si l'écart entre une vitesse de rotation du rotor ($V_{MOT}$) calculée à partir dudit signal de position du rotor $\theta$ et une vitesse de rotation du rotor ($\overline{V_{MOT}}$) déterminée à partir de ladite détermination de la vitesse de roue (Vrd) est supérieur à un seuil de vitesse prédéterminé.

6. Procédé selon l'une quelconque des revendications précédentes **caractérisé en ce que** ladite étape (E12) de correction de la consigne du courant d'excitation (If_sp) comporte :

- une étape (EA) de soustraction dudit couple moteur mesuré ou estimé (Tq_est) à ladite consigne de couple (Tq_sp)
- une étape (EB) de multiplication du résultat de ladite étape de soustraction par un facteur (G) positif ou nul pour obtenir une erreur pondérée ($\tilde{\varepsilon}$)
- une étape (EC) d'intégration temporelle de ladite erreur pondérée ($\tilde{\varepsilon}$)
- une étape (ED) d'addition à la consigne du courant d'excitation (If_sp) du résultat de ladite intégration de ladite erreur pondérée ($\tilde{\varepsilon}$)
- une étape (EE) de saturation en bas par zéro et en haut par une valeur maximale déterminée (Max_If) du résultat de ladite étape d'addition pour obtenir une consigne corrigée du courant d'excitation ($\overline{If\_sp}$).

7. Procédé selon la revendication précédente **caractérisé en ce que** ledit facteur G est nul lorsqu'au moins une des trois conditions suivantes est vérifiée :

- ladite consigne corrigée du courant d'excitation ($\overline{If\_sp}$) est nulle
- ladite consigne corrigée du courant d'excitation ($\overline{If\_sp}$) vaut ladite valeur maximale prédéterminée (Max_If)
- la valeur absolue du résultat de ladite étape d'intégration de ladite erreur pondérée ($\tilde{\varepsilon}$) est supérieure ou égale à un seuil prédéterminé (Max_mod)
, sinon ledit facteur (G) est positif.

8. Procédé selon la revendication précédente **caractérisé en ce que** la traction du véhicule est arrêtée dès que la valeur absolue du résultat de ladite étape d'intégration de ladite erreur pondérée ($\tilde{\varepsilon}$) est supérieure ou égale à un seuil prédéterminé.

9. Système de pilotage d'un moteur à rotor bobiné de véhicule électrique comportant:

- un moyen de réception d'une consigne de couple (Tq_sp)
- un moyen de réception d'un signal de position du rotor (θ)
- un moyen de calcul d'une vitesse du rotor (V$_{MOT}$) à partir dudit signal de position du rotor (θ)
- un moyen (MC) de détermination de consignes de courants statoriques (Id_sp et Iq_sp) et d'une consigne du courant d'excitation (If_sp) utilisant ledit signal de position du rotor (θ)
- un moyen (MRφ) d'asservissement des courants de phase dudit moteur aux consignes de courants statoriques (Id_sp et et Iq_sp) en fonction dudit signal de position du rotor (θ)
- un moyen (D) de détermination d'une vitesse de rotation du rotor ($\overline{V_{MOT}}$) à partir d'une vitesse de roue déterminée (Vrd) par ledit moyen (M) de détermination de vitesse de roue, et en ce que, lorsqu'un réducteur est présent, ledit moyen (D) de détermination de vitesse de rotation du rotor comporte un moyen de multiplication de ladite vitesse déterminée de roue (Vrd) par un rapport de réduction du réducteur du véhicule, **caractérisé en ce qu'**il comporte
- un moyen (MRE) d'asservissement en boucle fermée d'un courant d'excitation à la consigne du courant d'excitation (If_sp)
- un moyen de détection de défaillance du signal de position du rotor, suivi d'un moyen de remplacement dudit signal de position du rotor (θ) par un signal obtenu à partir d'un moyen de détermination de la vitesse de roue du véhicule,
- un moyen (E) d'estimation d'une position du rotor ($\tilde{θ}$) à partir de ladite vitesse du rotor ($\overline{V_{MOT}}$) déterminée par ledit moyen (D) de détermination de vitesse du rotor, ledit moyen (E) d'estimation d'une position du rotor ($\tilde{θ}$) étant un moyen d'intégration temporelle conditionné

    - à ladite défaillance du signal de position du rotor,
    ou,
    - au dépassement par la valeur absolue de la différence entre ladite vitesse déterminée de rotation du rotor ($\overline{V_{MOT}}$) et ladite vitesse calculée de rotation du rotor (VMOT) d'un seuil d'erreur prédéterminé en continu au-delà d'une durée prédéterminée,

- un moyen (C) de correction de la consigne du courant d'excitation du rotor (If_sp) utilisant ladite consigne de courant d'excitation (If_sp), ladite consigne de couple (Tq_sp) ainsi qu'une mesure ou estimation dudit couple moteur (Tq_est) issue d'un moyen de mesure ou d'estimation dudit couple moteur.

## Patentansprüche

1. Verfahren zur Steuerung eines Motors mit gewickeltem Rotor eines Elektrofahrzeugs, umfassend:

    - einen Schritt (E1) des Empfangs eines Drehmoment-Sollwertes (Tq_sp),
    - einen Schritt (E2) des Empfangs eines Positionssignals des Rotors (θ),
    - einen Schritt (E3) der Berechnung einer Drehzahl des Rotors (V$_{MOT}$) aus dem Positionssignal des Rotors (θ),
    - einen Schritt (E4) der Bestimmung von Sollwerten von Statorströmen (Id_sp und Iq_sp) und eines Sollwertes des Erregerstroms (If_sp) unter Verwendung der berechneten Drehzahl des Rotors (V$_{MOT}$) und des Drehmoment-Sollwertes (Tq_sp),
    - einen Schritt (E5) der Regelung der Phasenströme des Motors auf die Sollwerte von Statorströmen (Id_sp und Iq_sp) in Abhängigkeit von dem Positionssignal des Rotors (θ),

    - einen Schritt (E10) der Bestimmung einer Drehzahl des Rotors $(\widetilde{V_{MOT}})$ aus der bestimmten Raddrehzahl (Vrd), die, wenn ein Untersetzungsgetriebe vorhanden ist, die Multiplikation der bestimmten Raddrehzahl (Vrd) mit einem Untersetzungsverhältnis des Untersetzungsgetriebes des Fahrzeugs umfasst, **dadurch gekennzeichnet, dass** es umfasst:
    - einen Schritt (E6) der Regelung eines Erregerstroms im geschlossenen Regelkreis auf den Sollwert des Erregerstroms (If_sp),
    - einen Schritt (E7) der Erkennung eines Ausfalls des Positionssignals des Rotors, gefolgt von einem Schritt (E8) des Ersetzens des Positionssignals des Rotors (θ) durch ein Signal, das aus einem Schritt (E9) der Bestimmung einer Raddrehzahl des Fahrzeugs erhalten wurde,
    - einen Schritt (E11) der Schätzung einer Position des Rotors ($\tilde{θ}$) anhand der zuvor bestimmten Drehzahl des

Rotors $(\widetilde{V_{MOT}})$, wobei der Schritt (E11) der Schätzung einer Position des Rotors ($\tilde{θ}$) ein Schritt der Zeitintegration ist, der gebunden ist

- an den Ausfall des Positionssignals des Rotors, oder

- daran, dass der absolute Betrag der Differenz zwischen der bestimmten Drehzahl des Rotors $(\widetilde{V_{MOT}})$ und der berechneten Drehzahl des Rotors ($V_{MOT}$) einen vorbestimmten Fehlerschwellenwert länger als während einer vorbestimmten Dauer ununterbrochen überschreitet,

- einen Schritt (E12) der Korrektur des Sollwertes des Erregerstroms des Rotors (If_sp) unter Verwendung dieses Erregerstrom-Sollwertes (If_sp) in Abhängigkeit von der bestimmten Drehzahl des Rotors $(\widetilde{V_{MOT}})$, dem Drehmoment-Sollwert (Tq_sp) sowie einer Messung oder Schätzung des Motordrehmoments (Tq_est).

2. Verfahren nach Anspruch 1, **dadurch gekennzeichnet, dass** im Schritt (E9) der Bestimmung der Raddrehzahl der Mittelwert von Drehzahlen (Vrm1, Vrm2, Vrm3 und Vrm4) berechnet wird, die an jedem der Räder des Fahrzeugs durch wenigstens einen Raddrehzahlsensor gemessen werden.

3. Verfahren nach Anspruch 1 oder 2, **dadurch gekennzeichnet, dass** der Ausfall des Positionssignals des Rotors erkannt wird, falls die Abweichung zwischen einem Messwert eines ersten Positionssensors des Rotors und einem Messwert eines zweiten Positionssensors des Rotors größer als ein vorbestimmter Winkelschwellenwert ist.

4. Verfahren nach Anspruch 3, **dadurch gekennzeichnet, dass** das Positionssignal des Rotors ($\theta$) der Mittelwert der zwei Messwerte von Positionssensoren des Rotors ist.

5. Verfahren nach Anspruch 1 oder 2, **dadurch gekennzeichnet, dass** der Ausfall des Positionssignals des Rotors erkannt wird, falls die Abweichung zwischen einer aus dem Positionssignal des Rotors ($\theta$) berechneten Drehzahl des Rotors ($V_{MOT}$) und einer aus der Bestimmung der Raddrehzahl (Vrd) bestimmten Drehzahl des Rotors $(\widetilde{V_{MOT}})$ größer als ein vorbestimmter Drehzahlschwellenwert ist.

6. Verfahren nach einem der vorhergehenden Ansprüche, **dadurch gekennzeichnet, dass** der Schritt (E12) der Korrektur des Sollwertes des Erregerstroms (If_sp) umfasst:

- einen Schritt (EA) der Subtraktion des gemessenen oder geschätzten Motordrehmoments (Tq_est) von dem Drehmoment-Sollwert (Tq_sp),
- einen Schritt (EB) der Multiplikation des Ergebnisses des Schrittes der Subtraktion mit einem Faktor (G), der positiv oder gleich null ist, um einen gewichteten Fehler ($\tilde{\varepsilon}$) zu erhalten,
- einen Schritt (EC) der Zeitintegration des gewichteten Fehlers ($\tilde{\varepsilon}$),
- einen Schritt (ED) der Addition des Ergebnisses der Integration des gewichteten Fehlers ($\tilde{\varepsilon}$) zu dem Sollwert des Erregerstroms (If_sp),
- einen Schritt (EE) der Begrenzung des Ergebnisses des Schrittes der Addition nach unten durch null und nach oben durch einen bestimmten maximalen Wert (Max_If), um einen korrigierten Sollwert des Erregerstroms $(\widetilde{If\_sp})$ zu erhalten.

7. Verfahren nach dem vorhergehenden Anspruch, **dadurch gekennzeichnet, dass** der Faktor G gleich null ist, wenn wenigstens eine der folgenden drei Bedingungen erfüllt ist:

- Der korrigierte Sollwert des Erregerstroms $(\widetilde{If\_sp})$ ist gleich null,

- der korrigierte Sollwert des Erregerstroms $(\widetilde{If\_sp})$ ist gleich dem vorbestimmten maximalen Wert (Max_If),
- der absolute Betrag des Ergebnisses des Schrittes der Integration des gewichteten Fehlers ($\tilde{\varepsilon}$) ist größer oder gleich einem vorbestimmten Schwellenwert (Max_mod), und dass andernfalls der Faktor (G) positiv ist.

8. Verfahren nach dem vorhergehenden Anspruch, **dadurch gekennzeichnet, dass** die Traktion des Fahrzeugs gestoppt wird, sofern der absolute Betrag des Ergebnisses des Schrittes der Integration des gewichteten Fehlers ($\tilde{\varepsilon}$) größer oder gleich einem vorbestimmten Schwellenwert ist.

9. System zur Steuerung eines Motors mit gewickeltem Rotor eines Elektrofahrzeugs, umfassend:

- ein Mittel zum Empfang eines Drehmoment-Sollwertes (Tq_sp),
- ein Mittel zum Empfang eines Positionssignals des Rotors ($\theta$),
- ein Mittel zur Berechnung einer Drehzahl des Rotors ($V_{MOT}$) aus dem Positionssignal des Rotors ($\theta$),
- ein Mittel (MC) zur Bestimmung von Sollwerten von Statorströmen (Id_sp und Iq_sp) und eines Sollwertes des Erregerstroms (If_sp) unter Verwendung des Positionssignals des Rotors ($\theta$),
- ein Mittel (MRφ) zur Regelung der Phasenströme des Motors auf die Sollwerte von Statorströmen (Id_sp und Iq_sp) in Abhängigkeit von dem Positionssignal des Rotors ($\theta$),

- ein Mittel (D) zur Bestimmung der Drehzahl des Rotors $(\widetilde{V_{MOT}})$ aus einer Raddrehzahl (Vrd), die von dem Mittel (M) zur Bestimmung der Raddrehzahl bestimmt wurde, und wobei, wenn ein Untersetzungsgetriebe vorhanden ist, das Mittel (D) zur Bestimmung einer Drehzahl des Rotors ein Mittel zur Multiplikation der bestimmten Raddrehzahl (Vrd) mit einem Untersetzungsverhältnis des Untersetzungsgetriebes des Fahrzeugs umfasst,

**dadurch gekennzeichnet, dass** es umfasst:

- ein Mittel (MRE) zur Regelung eines Erregerstroms im geschlossenen Regelkreis auf den Sollwert des Erregerstroms (If_sp),
- ein Mittel zur Erkennung eines Ausfalls des Positionssignals des Rotors, gefolgt von einem Mittel zum Ersetzen des Positionssignals des Rotors ($\theta$) durch ein Signal, das von einem Mittel zur Bestimmung der Raddrehzahl des Fahrzeugs erhalten wurde,

- ein Mittel (E) zur Schätzung einer Position des Rotors ($\tilde{\theta}$) anhand der Drehzahl des Rotors $(\widetilde{V_{MOT}})$, die von dem Mittel (D) zur Bestimmung der Drehzahl des Rotors bestimmt wurde, wobei das Mittel (E) zur Schätzung einer Position des Rotors ($\tilde{\theta}$) ein Mittel zur Zeitintegration ist, das gebunden ist

- an den Ausfall des Positionssignals des Rotors,
oder

- daran, dass der absolute Betrag der Differenz zwischen der bestimmten Drehzahl des Rotors $(\widetilde{V_{MOT}})$ und der berechneten Drehzahl des Rotors ($V_{MOT}$) einen vorbestimmten Fehlerschwellenwert länger als während einer vorbestimmten Dauer ununterbrochen überschreitet,

- ein Mittel (C) zur Korrektur des Sollwertes des Erregerstroms des Rotors (If_sp) unter Verwendung dieses Erregerstrom-Sollwertes (If_sp), des Drehmoment-Sollwertes (Tq_sp) sowie einer Messung oder Schätzung des Motordrehmoments (Tq_est), die von einem Mittel zur Messung oder Schätzung des Motordrehmoments stammt.

## Claims

1. Method for controlling an electric-vehicle wound-rotor motor, comprising:

- a step (E1) of receiving a torque setpoint (Tq_sp)
- a step (E2) of receiving a signal indicating rotor position ($\theta$)
- a step (E3) of computing a rotor velocity ($V_{MOT}$) from said signal indicating rotor position ($\theta$)
- a step (E4) of determining stator-current setpoints (Id_sp and Iq_sp) and an excitation-current setpoint (If_sp) using said computed rotor velocity ($V_{MOT}$) and said torque setpoint (Tq_sp)
- a step (E5) of automatically controlling the phase currents of said motor to the stator-current setpoints (Id_sp and Iq_sp) depending on said signal indicating rotor position ($\theta$)

- a step (E10) of determining a rotor-rotation velocity $(\widetilde{V_{MOT}})$ from said determined wheel velocity (Vrd) comprising, when reducing gearing is present, multiplying said determined wheel velocity (Vrd) by a reduction ratio of the reducing gearing of the vehicle,
**characterized in that** it comprises
- a step (E6) of automatic closed-loop control of an excitation current to the excitation-current setpoint (If_sp)
- a step (E7) of detecting failure of the signal indicating rotor position, followed by a step (E8) of replacing said signal indicating rotor position ($\theta$) with a signal obtained in a step (E9) of determining a wheel velocity of the vehicle

- a step (E11) of estimating a rotor position ($\tilde{\theta}$) from said rotor velocity $(\widetilde{V_{MOT}})$ determined beforehand, said step (E11) of estimating a rotor position ($\tilde{\theta}$) being a step of integrating with respect to time that is conditional

> - to said failure of the signal indicating rotor position,
> or,
>
> - to the absolute value of the difference between said determined rotor-rotation velocity $(\widetilde{V_{MOT}})$ and said computed rotor-rotation velocity (VMOT) exceeding an error threshold that is continuously preset beyond a preset time.

- a step (E12) of correcting the rotor-excitation-current setpoint (If_sp) using said excitation-current setpoint (If_sp) dependent on said determined rotor-rotation velocity $(\widetilde{V_{MOT}})$, said torque setpoint (Tq_sp) and a measurement or estimation (Tq_est) of said motor torque.

2. Method according to Claim 1, **characterized in that**, in said step (E9) of determining said wheel velocity, the average of velocities (Vrm1, Vrm2, Vrm3 and Vrm4) measured for each of the wheels of said vehicle by at least one wheel-velocity sensor is computed.

3. Method according to Claim 1 or 2, **characterized in that** said failure of the signal indicating rotor position is detected if the discrepancy between a measurement of a first rotor-position sensor and a measurement of a second rotor-position sensor is larger than a preset angle threshold.

4. Method according to Claim 3, **characterized in that** said signal indicating rotor position ($\theta$) is the average of said two rotor-position-sensor measurements.

5. Method according to Claim 1 or 2, **characterized in that** said failure of the signal indicating rotor position is detected if the discrepancy between a rotor-rotation velocity ($V_{MOT}$) computed from said signal indicating rotor position ($\theta$) and a rotor-rotation velocity $(\widetilde{V_{MOT}})$ determined from said determination of the wheel velocity (Vrd) is larger than a preset velocity threshold.

6. Method according to any one of the preceding claims, **characterized in that** said step (E12) of correcting the excitation-current setpoint (If_sp) comprises:

> - a step (EA) of subtracting said measured or estimated motor torque (Tq_est) from said torque setpoint (Tq_sp)
> - a step (EB) of multiplying the result of said subtracting step by a positive or zero factor (G) to obtain a weighted error ($\tilde{\varepsilon}$)
> - a step (EC) of integrating with respect to time said weighted error ($\tilde{\varepsilon}$)
> - a step (ED) of adding to the excitation-current setpoint (If_sp) the result of said integration of said weighted error ($\tilde{\varepsilon}$)
> - a step (EE) of saturating, downward to zero and upward to a determined maximum value (Max_If), the result of said adding step to obtain a corrected excitation-current setpoint $(\widetilde{If\_sp})$.

7. Method according to the preceding claim, **characterized in that** said factor G is zero when at least one of the three following conditions is met:

> - said corrected excitation-current setpoint $(\widetilde{If\_sp})$ is zero
> - said corrected excitation-current setpoint $(\widetilde{If\_sp})$ is equal to said preset maximum value (Max_If)

- the absolute value of the result of said step of integrating said weighted error ($\tilde{\varepsilon}$) is higher than or equal to a preset threshold (Max_mod)
, else said factor (G) is positive.

8. Method according to the preceding claim, **characterized in that** the traction of the vehicle is stopped as soon as the absolute value of the result of said step of integrating said weighted error ($\tilde{\varepsilon}$) is higher than or equal to a preset threshold.

9. System for controlling an electric-vehicle wound-rotor motor, comprising:

- a means for receiving a torque setpoint (Tq_sp)
- a means for receiving a signal indicating rotor position ($\theta$)
- a means for computing a rotor velocity ($V_{MOT}$) from said signal indicating rotor position ($\theta$)
- a means (MC) for determining stator-current setpoints (Id_sp and Iq_sp) and an excitation-current setpoint (If_sp) using said signal indicating rotor position ($\theta$)
- a means (MR$\phi$) for automatically controlling the phase currents of said motor to the stator-current setpoints (Id_sp and Iq_sp) depending on said signal indicating rotor position ($\theta$)

- a means (D) for determining a rotor-rotation velocity $(\widetilde{V_{MOT}})$ from a wheel velocity (Vrd) determined by said means (M) for determining wheel velocity, and in that, when reducing gearing is present, said means (D) for determining rotor-rotation velocity comprises a means for multiplying said determined wheel velocity (Vrd) by a reduction ratio of the reducing gearing of the vehicle, **characterized in that** it comprises
- a means (MRE) for automatic closed-loop control of an excitation current to the excitation-current setpoint (If_sp)
- a means for detecting failure of the signal indicating rotor position, followed by a means for replacing said signal indicating rotor position ($\theta$) with a signal obtained from the means for determining the wheel velocity of the vehicle,

- a means (E) for estimating a rotor position ($\tilde{\theta}$) from said rotor velocity $(\widetilde{V_{MOT}})$ determined by said means (D) for determining rotor-rotation velocity, said means (E) for estimating a rotor position ($\tilde{\theta}$) being a means for integrating with respect to time that is conditional

- to said failure of the signal indicating rotor position,
or,

- to the absolute value of the difference between said determined rotor-rotation velocity $(\widetilde{V_{MOT}})$ and said computed rotor-rotation velocity (VMOT) exceeding an error threshold that is continuously preset beyond a preset time,

- a means (C) for correcting the rotor-excitation-current setpoint (If_sp) using said excitation-current setpoint (If_sp), said torque setpoint (Tq_sp) and a measurement or estimation (Tq_est) of said motor torque delivered by a means for measuring or estimating said motor torque.

# FIG. 1
## Art Antérieur

## FIG. 2

## FIG. 3

## FIG. 4

FIG. 5

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2437392 A
- EP 2555417 A
- US 20090076679 A
- US 20040158372 A